# EUROPÄISCHE PATENTANMELDUNG

(11) **EP 4 403 794 A1**
(43) Veröffentlichungstag der Anmeldung: **24.07.2024**
(21) Anmeldenummer: 24152018.8
(22) Anmeldetag: 16.01.2024
(51) Int. Cl.: F16H 1/08, F16H 57/02

(54) **EINTEILIGE ZAHNWELLE**

(30) Priorität: 17.01.2023 DE 102023100945
(71) Anmelder: Voith Patent GmbH, 89522 Heidenheim (DE)
(72) Erfinder: Glaser, Thomas, 89551 Königsbronn (DE); Heller, Dariya, 80804 München (DE)
(74) Vertreter: Voith Patent GmbH - Patentabteilung

(57) **Zusammenfassung**

Die Erfindung betrifft eine Druckkammritzelwelle (1) für den Betrieb in einem Getriebe eines Getriebeverdichters mit einer maximalen Drehzahl der Druckkammritzelwelle (1) von 30.000 - 90.000 U/min, zur Übertragung einer maximalen Leistung von 10 MW bis 100 MW, umfassend ein schrägverzahntes Zahnrad (2), zwei Druckkämme (3), und zwei Lagersitze (4), sowie und zumindest eine Anschlussstelle (5), wobei die Druckkammritzelwelle (1) einteilig gefertigt ist, und die Druckkämme (3) eine größte Länge der Basislinie (6) in axialer Richtung von 10 mm bis 25 mm aufweisen. Weiterhin betrifft die Erfindung ein Verfahren zu Herstellen einer Druckkammritzelwelle (1)

## Beschreibung

Die Erfindung betrifft eine Druckkammritzelwelle, für den Betrieb in einem Getriebe eines Getriebeverdichters, umfassend ein schrägverzahntes Zahnrad, zwei Druckkämme, zwei Lagersitze, und zumindest eine Anschlussstelle, sowie ein Verfahren zur Herstellung einer solchen Druckkammritzelwelle.

Aus dem Stand der Technik ist die DE 10 2014 207 431 A1 bekannt, die eine einteilig gefertigtes Zahnrad mit Druckkamm offenbart, sowie ein Verfahren zum Herstellen eines solchen Zahnrades. Der Stand der Technik offenbart jedoch nicht alle Merkmale, die für einen verlässlichen Betrieb in einem Hochleistungsgetriebe notwendig und vorteilhaft sind.

Die Aufgabe der Erfindung ist es eine verbesserte Druckkammritzelwelle bereitzustellen, die den hohen Belastungen über eine längere Betriebszeit standhält, verbesserte rotordynamische Eigenschaften aufweist und gleichzeig eine für hohe Drehzahlen und große übertragene Lasten ausgelegt ist.

Die Aufgabe wird erfindungsgemäß durch eine Ausführung entsprechend dem unabhängigen Anspruch gelöst. Weitere vorteilhafte Ausführungsformen der vorliegenden Erfindung finden sich in den Unteransprüchen. Erfindungsgemäß ist die Druckkammritzelwelle einteilig gefertigt, wobei die Druckkämme eine größte Länge der Basislinie in axialer Richtung von 10 mm bis 25 mm aufweisen und wobei die Druckkammritzelwelle ausgeführt ist bei einer maximalen Drehzahl von 30.000 - 90.000 U/min eine maximale Leistung von 10 MW bis 100 MW zu übertragen.

Ein Druckkamm ist geeignet axiale Kräfte aufzunehmen, die bei einem schrägverzahnten Zahnrad (Ritzel) in einem Getriebe auftreten. Der Einsatz von zwei Druckkämmen ermöglicht dabei den Betrieb des Getriebes in zwei Drehrichtungen, da eine Abstützung in beide axialen Richtungen erfolgen kann. Die Druckkämme erreichen eine Abstützung der Ritzelwelle an oder in Bezug auf das Antriebszahnrad.

Die erfindungsgemäße Druckkammritzelwelle ist für den Einsatz industriellen Integralgetrieben ausgeführt. Die Einsatzfelder dieser Integralgetriebe sind bevorzugt industrielle Expansionsturbinen und Verdichter, man spricht daher auch von Getriebeverdichtern. Die Anwendung erfordern sehr hohe übertragene Leistungen. Üblicherweise werden an einem Antriebsrad 1 bis 10 Verdichterstufen jeweils mittels Druckkammritzelwelle angeschlossen. Wobei die Leistungen jeder Verdichterstufen im Betrieb die 1000 kW überschreiten. Die großen übertragenen Leistungen haben zur Folge, dass die Druckkammritzelwelle hohe Festigkeiten aufweisen müssen, und daher vorteilhaft aus Stahlwerkstoffen hergestellt sind. Um mechanische Belastungen aufgrund von Fliehkräften zu reduzieren ist es weiterhin vorteilhaft das Gewicht der Druckkammritzelwelle zu verringern. Auch ein kompakter Aufbau der Druckkammritzelwelle ist vorteilhaft für die Festigkeit und das rotordynamische Verhalten, sowie die auftretenden Lagerkräfte.

Zudem werden bei der Leistungsübertragung sehr hohe Drehzahlen erreicht. Die Drehzahlen der Druckkammritzelwelle sind im Betrieb über 10.000 U/min. Die maximale Drehzahl der Druckkammritzelwelle kann in einer bevorzugten Ausführungsform insbesondere im Bereich von 45.000 U/min. bis 75.000 U/min liegen. Die hohen Drehzahlen haben auch sehr hohe Oberflächengeschwindigkeiten an den Zahnradoberflächen bzw. Zahnflanken zur Folge, eine besonders präzise Fertigung ist daher kritisch wichtig für die Druckkammritzelwelle. So kann ein guter Rundlauf ermöglicht werden, und unerwünschten Schwingungen an den Bauteilen des Getriebeverdichters werden vermindert. Im Stand der Technik werden bei der Vibrationsfestigkeit und beim Rundlauf immer wieder Limitierungen erreicht, die eine Begrenzung auf niedrigere Drehzahlen und/oder Leistungen erforderlich machen. Zur Vermeidung von Schwingungen ist auch eine kompakte Bauweise vorteilhaft. Weiterhin ist eine kompakte Bauweise vorteilhaft, um Biegekräfte zwischen Lagerstellen und Massenträgheitskräfte zu reduzieren.

Die Anschlussstelle beschreibt den Teil der Druckkammritzelwelle, der die Leistung aus dem Getriebe an den Verbraucher überträgt. Die Anschlussstelle ist also die Stelle an der die Verdichterstufen oder Verdichterlaufräder an die Druckkammritzelwelle angeschlossen wird. Dies Anschlussstelle kann dabei eine stirnseitige Verzahnung umfassen, oder ein bearbeitetes Wellenende, das mittels einem Kupplungselement mit der Verdichterstufen in Verbindung steht.

Weiterhin vorteilhaft ist eine Druckkammritzelwelle wobei die Druckkammritzelwelle zumindest zwei radial bearbeitete Sensorflächen umfasst und die Bearbeitung des schrägverzahnten Zahnrades, die dem Zahnrad zugewandten Seiten der Druckkämme, die Lagersitze, und/oder die Sensorflächen zueinander gleichgerichtet sind.

Bei einer einteilig aufgebauten Druckkammritzelwelle werden keine Spannungen durch das thermische Aufpressen eines Druckkamms, des Zahnrades auf die Druckkammritzelwelle induziert. Derartige Spannungen können zu einer Verformung der Druckkammritzelwelle führen, und den Rundlauf vermindern, oder zu Schwingungen im Betrieb führen. Diese Schwingungen können nachteilig den Pressverband zwischen Druckkamm und Ritzelwelle aufweiten und so die Verbindung schwächen.

Eine gleichrichtende Bearbeitung bedeutet, dass die Flächen zueinander eine mit hoher Präzision genau definierte Position haben. Eine gleichrichtende Bearbeitung oder gleichgerichtete Bearbeitung führt zu einer Druckkammritzelwelle, bei der die gleichgerichteten Flächen zueinander eine mit hoher Präzision definierte Position einnehmen. Damit kann auch bei hohen Geschwindigkeiten ein gleichmäßiger vibrationsarmer Lauf der Druckkammritzelwelle erreicht werden. Die für die hohen Belastungen und hohen Drehzahlen notwendigen Laufeigenschaften können an einer einteilig gefertigten Ritzelwelle nur erreicht werden, wenn die Feinbearbeitung und das Gleichrichten in einem Arbeitsschritt ausgeführt werden, wobei die Bearbeitung aller wichtigen Flächen ohne ein Umspannen in eine weitere Bearbeitungsmaschine erfolgt.

Weiterhin vorteilhaft ist eine Druckkammritzelwelle, wobei der Abstand zwischen den Lagersitzen zwischen 2-mal bis 4-mal der Zahnradbreite des schrägverzahnten Zahnrades entspricht.

Durch die einteilige Fertigung können die Druckkämme sehr kompakt gefertigt werden, und so ein geringeres Gewicht ermöglichen. In einer besonders vorteilhaften Ausführungsform der Erfindung konnten die Druckkämme und das schrägverzahnte Zahnrad in einem Abstand zwischen den Lagersitzen von 120 mm - 250 mm verbaut werden. Im Vergleich dazu sind ist der Abstand zwischen den Lagersitzen im Stand der Technik größer als 250 mm. Da die Größe der Druckkammritzelwelle je nach Übersetzung und Baugröße variiert, ist die Angabe zum Abstand zwischen den Lagersitzen relativ dargestellt.

Weiterhin vorteilhaft ist eine Druckkammritzelwelle die aus einem Stahlwerkstoff hergestellt ist. Für die Anwendung in Bereichen mit großer Lastübertragung und hoher Drehzahl sind insbesondere hochfeste Stahlwerkstoffe vorteilhaft. In Versuchen zu dieser Erfindung konnten die besten Ergebnisse mit Stahlwerkstoffen mit einer Festigkeit von über 350 N/mm² erzielt werden. Besonders vorteilhaft sind für die einteilige Druckkammritzelwelle hochfeste Stähle mit einer Festigkeit von 500 N/mm²-1500 N/mm².

Weiterhin vorteilhaft ist eine Druckkammritzelwelle, wobei die Oberfläche der Druckkammritzelwelle thermische oder thermochemisch gehärtet ist. Die Oberfläche des schrägverzahnten Zahnrades und die Oberfläche der Druckkämme sind hohen mechanischen Belastungen ausgesetzt. Eine thermisch gehärtete Oberfläche der Druckkammritzelwelle kann dabei die Betriebsdauer verbessern. Verfahren wie Einsatzhärten und Nitrieren sind weitere vorteilhafte thermochemische Verfahren, die hier zu einer vorteilhaften Druckkammritzelwelle führen.

Weiterhin vorteilhaft ist eine Druckkammritzelwelle, wobei die Oberfläche der Druckkammritzelwelle Nitriergehärtet ist, wobei der Werkstoff der Druckkammritzelwelle eine Stahllegierung ist, die zumindest eines der Legierungselemente Aluminium, Chrom, Molybdän, Vanadium und/oder Titan umfasst. Besonders vorteilhaft ist eine Druckkammritzelwelle aus einem Nitrierstahl, der mittels Nitrierung eine besonders verschleißarme Oberfläche aufweist. Vorteilhaft kann hier auch ein Einsatzhärten durchgeführt werden.

Weiterhin vorteilhaft ist eine Druckkammritzelwelle, bei der die Druckkämme beidseitig neben dem schrägverzahnten Zahnrad auf einem Wellengrundkörper angeordnet sind, und die Lagersitze entsprechend axial außerhalb neben den Druckkämmen, wobei zwischen dem schrägverzahnten Zahnrad und dem Druckkamm je eine Vertiefung ausgebildet ist. Die Vertiefung kann als umlaufende Nut ausgebildet sein, und ist vorteilhaft für eine gleichmäßige Verteilung von Schmiermittel an dem schrägverzahnten Zahnrad und/oder an den Druckkämmen.

Weiterhin vorteilhaft ist eine Druckkammritzelwelle, wobei zumindest ein Druckkamm der Druckkammritzelwelle in einem additiven Verfahren hergestellt ist.

Additive Verfahren, umfassen Verfahren die auch als 3D-Druck, Auftragsschweißen oder Generative Fertigung bekannt sind. Dabei wird Material in Schichten auf den Rohling aufgetragen, wobei eine materialschlüssige bzw. stoffschlüssige Verbindung entsteht. So kann der Druckkamm vorteilhaft an beliebige Stellen der Druckkammritzelwelle angebracht werden. Weiterhin werden keine Spannungen, die durch ein Aufpressen entstehen in die Druckkammritzelwelle induziert. Ein additives Verfahren kann weiterhin vorteilhaft eine besonders materialsparende Fertigung ermöglichen. Die Verbindung zwischen dem additiv gefertigten Druckkamm und der Ritzelwelle ist aufgrund der stoffschlüssigen Verbindung fester als einer Presssitz.

Weiterhin vorteilhaft ist eine Druckkammritzelwelle, wobei der additiv gefertigte Druckkamm an seiner Oberfläche ein härteres Material umfasst.

Bei einer additiven Fertigung wird das Material in Schichten aufgebracht, dabei können vorteilhaft verschiedene Werkstoffe kombiniert werden. Besonders vorteilhaft kann an der belasteten Seite des Druckkamms ein Stahlwerkstoff mit einer höheren Härte verwendet werden. Wobei der Rest des Druckkamms vorteilhaft einen Werkstoff mit einer geringeren Oberflächenhärte aber einer höheren Festigkeit und/oder Zähigkeit umfasst. Der so additiv gefertigte Druckkamm zeigt vorteilhaft einen geringeren Verschleiß, wobei gleichzeitig bessere Laufeigenschaften und reduzierte Vibrationen erreicht werden.

Weiterhin vorteilhaft ist eine Druckkammritzelwelle, wobei der additiv gefertigte Druckkamm zumindest einen Hohlraum aufweist.

Ein additiv hergestellter Druckkamm ermöglicht eine Struktur mit inneren Hohlräumen, wobei vorteilhaft das Gewicht reduziert wird. Weiterhin kann bei gleichem Gewicht eine verbesserte Steifigkeit erreicht werden. Die Hohlräume können dabei besonders vorteilhaft derart angeordnet werden, dass im Inneren des Druckkammes eine Stützstruktur mit Stützwänden entsteht, die entlang der Belastungsrichtungen angeordnet sind. In einer besonders vorteilhaften Ausführungsform befindet sich im Inneren des Druckkammes eine wabenähnliche Struktur, wobei die Wände in Belastungsrichtung ausgerichtet sind. So kann eine höhere Steifigkeit, bei geringem Gewicht vorteilhaft erreicht werden durch diese Druckkammausführung eine besonders vibrationsarme Druckkammritzelwelle bereitgestellt wird.

Erfindungsgemäß ist ein Verfahren zur Herstellung einer einteiligen Druckkammritzelwelle vorteilhaft, wobei folgende Verfahrensschritte in der genannten Reihenfolge ausgeführt werden:
- Bereitstellen und einspannen eines Rohlings in einer Bearbeitungsmaschine
- Spanende Bearbeitung des Rohlings in eine rotationssymmetrische Grundform zu einem Werkstück, wobei einige Flächen ein Übermaß aufweisen
- Herstellen einer geraden oder schrägen Vorverzahnung mittels definierter Schneide
- Ausspannen des Werkstücks
- Thermisches oder thermochemisches härten des Werkstücks
- Einspannen des Werkstücks in eine Bearbeitungsmaschine
- Feinbearbeitung des Werkstücks durch entfernen des Übermaßes
- Entnahme des Fertigen Werkstücks, der Druckkammritzelwelle aus der Werkzeugmaschine

Ein wichtiger Vorteil dieses Verfahrens ist, dass die Feinbearbeitung der Schrägverzahnung, bzw. Laufverzahnung, Lagerflächen, Sensorflächen und Anschlussflächen in einem Verfahrensschritt ausgeführt wird, ohne ein weiteres Einspannen des Werkstücks in eine Werkzeugmaschine. So kann eine hohe besonders vorteilhafte Präzision erreicht werden und die Maßtoleranz zwischen den einzelnen Oberflächen wird minimiert. Besonders wichtig ist dabei, dass alle Funktionsflächen an der Druckkammritzelwelle, ein Übermaß aufweisen, dass in der Feinbearbeitung entfernt werden kann. An dem schrägverzahnten Zahnrad sind diese Funktionsflächen der Teil der Oberfläche der in das Gegenzahnrad eingreift. Für den Zahnfuß und die Außenseiten ist es ausreichend nur eine Grobbearbeitung ohne Übermaß durchzuführen.

Weiterhin vorteilhaft ist ein Verfahren zur Herstellung einer einteiligen Druckkammritzelwelle, wobei in einem weiteren Verfahrensschritt vor einer spanenden Bearbeitung additiv Material auf den Rohling aufgebraucht wird.

Eine additive Fertigung, ermöglicht insbesondere das Aufbringen eines Druckkammes, der die oben beschriebenen Vorteile ermöglicht. Das schichtweise Aufbringen von Material in einer additiven Fertigung, ermöglicht eine spannungsarme Ausbildung der Druckkammritzelwelle. Weiterhin und kann vorteilhaft an belasteten Oberflächen durch das Aufbringen von hochfesten Werkstoffen, eine Verschleißarmer Druckkamm ausgebildet werden.

Eine partielle additive Fertigung, ermöglicht insbesondere das Aufbringen eines verschleiß-/hochfesten Materials auf den belasteten Seiten eines am Wellengrundkörper vorgesehenen, Druckkamms wodurch ein Verschleißarmer Druckkamm ausgebildet wird.

Weiterhin vorteilhaft ist ein Verfahren zur Herstellung einer einteiligen Druckkammritzelwelle, wobei die Feinbearbeitung ein Gleichrichten zumindest eines Teils der Oberfläche des schrägverzahnten Zahnrades in Bezug zu den Lagersitzen, den Innenseiten der Druckkämme, den Sensorflächen und/oder den Anschlussstellen umfasst.

In einer Besonders bevorzugten Ausführungsform werden die beschriebenen Funktionsflächen des schrägverzahnten Zahnrades mit den Kontaktflächen der Druckkämme und den Anschlussstellen gleichgerichtet. Ein Gleichrichten erfolgt dabei indem in einem Arbeitsschritt und auf derselben Werkzeugmaschine die Oberflächen in einer präzisen, definierten Position zueinander bearbeitet werden. Ein wiederholtes Ein- und Ausspannen des Werkstücks führt hier zu einer geringeren Toleranz der Bearbeitung.

Weiterhin vorteilhaft ist ein Verfahren zur Herstellung einer einteiligen Druckkammritzelwelle, wobei die Feinbearbeitung eine Bearbeitung der Oberflächen mit definierten Schneideelementen und/oder eine Bearbeitung mit Schleifwerkzeugen mit undefinierten Schneiden umfasst.

Werkzeuge mit definierter Schneide sind dabei Schneidwerkzeuge, die einen definierten Schnitt an der Oberfläche ausführen, wie z.B. Fräswerkzeuge. Werkzeuge mit definierter Schneide weisen eine Schneidegeometrie, auf deren relative Lage und Geschwindigkeit zur Oberfläche definiert ist. Schleifwerkzeuge mit undefinierten Schneiden, tragen geringe Mengen Material von dem Werkstück über eine Körnung ab. Die einzelnen Körner der Körnung sind dabei nicht in einer definierten Position, dennoch können in dem Arbeitsschritt mit undefinierten Schneiden eine hohe Präzision erreicht werden und weniger strukturierte Oberflächen erzeugt werden.

Weiterhin vorteilhaft ist ein Verfahren zur Herstellung einer einteiligen Druckkammritzelwelle wobei den Druckkämmen in einem weiteren Verfahrensschritt eine Kerbe und/oder eine Phase hinzugefügt werden, wobei dieser Arbeitsschritt nach der ersten Bearbeitung zu einem Werkstück in einer rotationssymmetrischen Grundform und vor der Feinbearbeitung des Werkstücks erfolgt.

Eine Kerbe, die an der Basisline angeordnet ist, kann dabei vorteilhaft die Verteilung und den Transport des Schmiermittels verbessern. Eine Phase, an der nicht belasteten Seite des Druckkamms kann Material entfernen, dass nicht wesentlich zur Festigkeit des Druckkamms beiträgt. Somit kann eine Phase das Gewicht der Druckkammritzelwelle verringern, und Masseträgheitskräfte reduzieren. Eine Phase kann zudem Schwingungen und Biegespannungen reduzieren. Eine Phase umfasst dabei eine gerade Phase, beispielsweise in einem Winkel von 45° zur Drehachse der Druckkammritzelwelle. Weiterhin umfasst eine Phase im Sinne dieser Erfindung auch einen aufgebrachten Radius oder elliptische Form der Oberfläche.

Die Feinbearbeitung ermöglicht weiterhin komplexere Oberflächen- Geometrien und Strukturen, sowohl an den Zahnflächen des schrägverzahnten Zahnrades als auch an den Lager- Anschluss- und/oder Sensorflächen. So kann beispielsweise eine Konus-Verzahnung erstellt werden.

Im Folgenden wird die Erfindung anhand von Figuren erläutert. Die Figuren zeigen im Einzelnen:
Fig.1 Schematische Ansicht Druckkammritzelwelle 1.
Fig.2 Druckkammritzelwelle 1 mit weiteren Merkmalen der Erfindung.

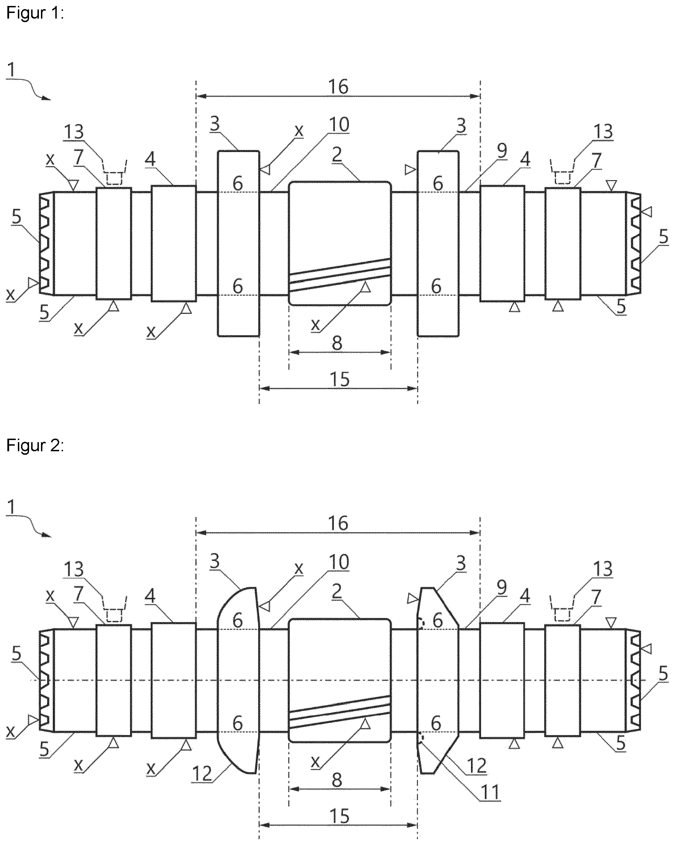

Figur 1 zeigt eine schematische nicht maßstäbliche Ansicht der Druckkammritzelwelle 1. Ungefähr mittig auf der Druckkammritzelwelle 1 ist ein schrägverzahntes Zahnrad 2 angeordnet, das eine Zahnradbreite 8 aufweist. Neben dem Zahnrad ist beidseitig eine Vertiefung 10 angeordnet, die insbesondere für eine Schmiermittelverteilung wichtig ist, und vorteilhaft eine Breite von 5 mm bis 15 mm auf in axialer Richtung aufweist. Neben der Vertiefung 10 sind zwei Druckkämme 3 angeordnet. Die Druckkämme 3, wie auch das schrägverzahnte Zahnrad 2 bilden dabei eine bauliche Einheit mit der Druckkammritzelwelle. Daher sind an den Druckkämmen 3 keine Halteringe angeordnet. Der Abstand zwischen den Druckkämmen 15 ist ebenfalls dargestellt. Die Druckkämme verfügen jeweils über eine Basislinie, die eine Gedachte Linie ist, und die Breite der Druckkämme auf dem Wellengrundkörper 9 angibt. Die Basislinie ist dabei als rotationsymmetrische Zylinderfläche zu verstehen, die jeweils Verbindung eines Druckkamms mit dem Wellengrundkörper 9 darstellt. Je nachdem, wie weit die Vertiefung 10 in den Wellengrundkörper 9 eindringt, kann die Basislinie auch schräg in Bezug zu der Rotationsachse a verlaufen. Die Rotationsachse a zeigt dabei die Achse an, um die sich die Druckkammritzelwelle 1 im Betrieb drehen kann. Die Druckkammritzelwelle 1 umfasst weiterhin zwei Lagersitze 4, die die Druckkammritzelwelle 1 mittels eines nicht dargestellten Lagers in einem Gehäuse eines Getriebes halten. Die Druckkammritzelwelle 1 umfasst weiterhin zwei Sensorflächen 7, an denen jeweils ein Sensor 13 angeordnet ist. Der Sensor kann dabei eine Drehzahl, einen Rundlauf und/oder Vibrationen der Druckkammritzelwelle 1 detektieren und den oder die Messwerte an ein übergeordnetes Warn und/oder Regelsystem weitergeben. Weiterhin kann der Sensor auch ausgelegt sein, mechanische Spannungen in der Druckkammritzelwelle 1 zu messen, oder Abweichungen zwischen Stellwert und Istwert der Drehzahl. Die Druckkammritzelwelle 1 umfasst zumindest eine Anschlussstelle 5, in dem Bild sind vier optionale Anschlussstellen 5 dargestellt, wobei in der Praxis auch nur eine oder zwei Anschlussstellen 5 vorgesehen seinen können. Die Anschlussstelle 5 kann, als bearbeite Umfangsfläche der Welle ausgeführt sein, oder eine stirnseitige Verzahnung umfassen, die in ein Kupplungselement eines Verbrauchers eingreifen kann. Die Darstellung zeigt eine Mehrzahl von optional gleichgerichteten Oberflächen x, aus Gründen der Lesbarkeit sind nur ein Teil der gleichgerichteten Oberflächen x mit einem "x" Markiert, der andere Teil ist mit einem Dreieckssymbol gekennzeichnet. Die Zeichnung ist dabei so zu verstehen, dass ausgehend von den feinbearbeiten Zahnflächen zumindest eine der gleichgerichteten Oberflächen x gleichgerichtet sind, optional mehrere oder alle Oberflächen x.

Figur 2 zeigt eine weitere schematische nicht maßstäbliche Ansicht der Druckkammritzelwelle 1, mit weiteren optionalen Merkmalen der Erfindung. Im Unterschied zu Figur 1 sind hier zwei unterschiedliche optionale Ausführungsformen der Druckkämme 3 dargestellt. Auf der Seite rechts von dem schräg verzahnten Zahnrad 2 ist eine optionale Ausführungsform des Druckkamms 3 dargestellt, der eine Phase 12 zur Gewichtsreduzierung umfasst und eine Kerbe 11, die geeignet ist die Schmiermittelführung zu verbessern. Die Kerbe 11 kann auch Spannungsspitzen an der Basislinie 6 reduzieren. Auf der linken Seite des schrägverzahnen Zahnrads 2 ist eine weitere optionale Ausführungsform des Druckkamms 3 dargestellt, bei dem die Phase 12 in Form einer Rundung oder eines Radius ausgeführt ist. Auch wenn zwei unterschiedliche Ausführungsformen der Druckkämme in Figur 2 dargestellt sind, ist es üblich zwei gleiche Ausführungsformen in zu verwenden, um die Axialkräfte unabhängig von der Drehrichtung der Druckkammritzelwelle 1 gleichartig aufnehmen zu können. Ein symmetrischer Aufbau der Druckkammritzelwelle 1 hat weiterhin Vorteile für den Rundlauf bei hohen Geschwindigkeiten und für die Handhabung, beim Einbau der Druckkammritzelwelle 1 in das Getriebe. Der Abstand zwischen den Lagersitzen 14 ist in dieser Ausführungsform vorteilhaft in einem Bereich von 140 mm bis 240 mm, wobei der größte Durchmesser der Druckkämme 3 in einem Bereich von 70 mm bis 110 mm gewählt ist. Zahnradbreite ist in diesem Beispiel in einem Größenbereich von 30 mm - 60 mm gewählt und der Abstand zwischen den Druckkämmen 15 in einem Bereich von 60 mm - 90 mm. Werden diese Maßangaben eingehalten ist ein besonders schwingungsarmer Betrieb möglich.

### Bezugszeichenliste

- 1: Druckkammritzelwelle
- 2: schräg verzahntes Zahnrad
- 3: Druckkamm
- 4: Lagersitz
- 5: Anschlussstelle
- 6: Basisline
- 7: Sensorfläche
- 8: Zahnradbreite
- 9: Wellengrundkörper
- 10: Vertiefung
- 11: Kerbe
- 12: Phase
- 13: Sensor
- 14: Abstand zwischen den Lagersitzen
- 15: Abstand zwischen den Druckkämmen

- a: Rotationsachse
- x: gleichgerichtete Oberflächen

## Patentansprüche

1. Druckkammritzelwelle (1) für den Betrieb in einem Getriebe eines Getriebeverdichters, umfassend ein schrägverzahntes Zahnrad (2), zwei Druckkämme (3), zwei Lagersitze (4), und zumindest eine Anschlussstelle (5), **dadurch gekennzeichnet, dass die** Druckkammritzelwelle (1) einteilig gefertigt ist, und die Druckkämme (3) eine größte Länge der Basislinie (6) in axialer Richtung von 10 mm bis 25 mm aufweisen, wobei die Druckkammritzelwelle (1) ausgeführt ist bei einer maximalen Drehzahl von 30.000 - 90.000 U/min eine maximale Leistung von 10 MW bis 100 MW zu übertragen.

2. Druckkammritzelwelle (1) nach Anspruch 1, **dadurch gekennzeichnet, dass** die Druckkammritzelwelle (1) zumindest zwei radial bearbeitete Sensorflächen (7) umfasst wobei die Zahnflanken des schrägverzahnten Zahnrades (2) in Bezug zu den dem Zahnrad (2) zugewandten Seitenflächen der Druckkämme (3), zu den Lagersitzen (4), und/oder den Sensorflächen (7) gleichgerichtet sind.

3. Druckkammritzelwelle (1) nach Anspruch 1 oder 2, **dadurch gekennzeichnet, dass** der Abstand zwischen den Lagersitzen (16) zwischen 2-mal bis 4-mal der Zahnradbreite (8) des schrägverzahnten Zahnrades (2) entspricht.

4. Druckkammritzelwelle (1) nach einem der vorherigen Ansprüche,
**dadurch gekennzeichnet, dass** die Druckkammritzelwelle (1) aus einem Stahlwerkstoff hergestellt ist.

5. Druckkammritzelwelle (1) nach einem der vorherigen Ansprüche,
**dadurch gekennzeichnet, dass** die Oberfläche der Druckkammritzelwelle (1) thermisch oder thermochemisch gehärtet ist.

6. Druckkammritzelwelle (1) nach einem der vorherigen Ansprüche,
**dadurch gekennzeichnet, dass** die Oberfläche der Druckkammritzelwelle (1) Nitriergehärtet ist, wobei der Werkstoff der Druckkammritzelwelle (1) eine Stahllegierung ist, die zumindest eines der Legierungselemente Aluminium, Chrom, Molybdän, Vanadium und/oder Titan umfasst.

7. Druckkammritzelwelle (1) nach einem der vorherigen Ansprüche,
**dadurch gekennzeichnet, dass** die Druckkammritzelwelle (1) die Druckkämme (3) beidseitig neben dem schrägverzahnten Zahnrad (2) auf einem Wellengrundkörper (9) angeordnet sind, und die Lagersitze (4) entsprechend axial außerhalb neben den Druckkämmen (3), wobei zwischen dem schrägverzahnten Zahnrad (2) und dem Druckkamm (3) je eine Vertiefung (10) ausgebildet ist.

8. Druckkammritzelwelle (1) nach einem der vorherigen Ansprüche,
**dadurch gekennzeichnet, dass** zumindest ein Druckkamm (3) oder ein Teil des Druckkamms (3) der Druckkammritzelwelle (1) in einem additiven Verfahren hergestellt ist.

9. Druckkammritzelwelle (1) nach Anspruch 8, **dadurch gekennzeichnet, dass** der Druckkamm (3) an seiner Oberfläche ein härteres Material umfasst.

10. Druckkammritzelwelle (1) nach Anspruch 8 oder Anspruch 9, **dadurch gekennzeichnet, dass** der additiv gefertigte Druckkamm (3) zumindest einen Hohlraum aufweist.

11. Verfahren zur Herstellung einer einteiligen Druckkammritzelwelle (1), wobei folgende Verfahrensschritte in der genannten Reihenfolge ausgeführt werden:
• Bereitstellen und einspannen eines Rohlings in einer Bearbeitungsmaschine
• Spanende Bearbeitung des Rohlings in eine rotationssymmetrische Grundform zu einem Werkstück, wobei einige Flächen ein Übermaß aufweisen
• Herstellen einer schrägen Vorverzahnung mittels definierter Schneide
• Ausspannen des Werkstücks
• Thermisches härten des Werkstücks
• Einspannen des Werkstücks in eine Bearbeitungsmaschine
• Feinbearbeitung des Werkstücks durch entfernen des Übermaßes
• Entnahme des fertigen Werkstücks, der Druckkammritzelwelle (1) aus der Werkzeugmaschine

12. Verfahren zur Herstellung einer einteiligen Druckkammritzelwelle (1) nach Anspruch 11, **dadurch gekennzeichnet, dass** in einem weiteren Verfahrensschritt vor der Spanenden Bearbeitung additiv Material auf den Rohling aufgebraucht wird.

13. Verfahren zur Herstellung einer einteiligen Druckkammritzelwelle (1) nach Anspruch11, oder Anspruch 12, **dadurch gekennzeichnet, dass** die Feinbearbeitung ein Gleichrichten zumindest eines Teils der Oberfläche des schrägverzahnten Zahnrades (2) in Bezug zu den Lagersitzen (3), den Innenseiten der Druckkämme (3), den Sensorflächen (7) und/oder den Anschlussstellen (5) umfasst.

14. Verfahren zur Herstellung einer einteiligen Druckkammritzelwelle (1) nach einem der vorherigen Ansprüche 11 bis 13, **dadurch gekennzeichnet, dass** die Feinbearbeitung eine Bearbeitung der Oberflächen mit definierten Schneideelementen und/oder eine Bearbeitung mit Schleifwerkzeugen mit undefinierten Schneiden umfasst.
